# EUROPEAN PATENT APPLICATION

(11) **EP 4 641 525 A1**
(43) Date of publication of application: **29.10.2025**
(21) Application number: 25177555.7
(22) Date of filing: 20.05.2025
(51) Int. Cl.: G06V 20/58

(54) **CONTROL METHOD AND APPARATUS FOR VEHICLE, ELECTRONIC DEVICE, AND STORAGE MEDIUM**

(30) Priority: 20.05.2024 CN 202410628313
(71) Applicant: Beijing Horizon Information Technology Co., Ltd., Beijing 100094 (CN)
(72) Inventor: SHEN, Huadong, Beijing, 100094 (CN)
(74) Representative: v. Bezold & Partner Patentanwälte - PartG mbB

(57) **Abstract**

Embodiments of the present disclosure disclose a control method for a vehicle, an electronic device, and a storage medium. The method includes: acquiring a first image captured by a camera with a preset viewing angle mounted on the vehicle; transforming the first image into a second image in bird's-eye view; determining, based on the second image, a first predicted driving trajectory of the vehicle in a local coordinate system; correcting the first predicted driving trajectory based on observation information corresponding to the first image to obtain a second predicted driving trajectory; and controlling a driving state of the vehicle based on the second predicted driving trajectory.

## Description

### TECHNICAL FIELD

The present disclosure relates to computer visual technologies, and in particular, to a control method and apparatus for a vehicle, an electronic device, and a storage medium.

### BACKGROUND

In technical fields such as assisted driving, a visual perception solution typically includes front-view recommended driving trajectory (which may be also referred to as driveline) perception technology. In related technologies, there is often heavy reliance on lane line detection to determine a recommended driving trajectory. However, in scenarios such as badly worn road markings, severe road congestion and occlusions, and complex changes in intersections and lane numbers, lane line detection is prone to omission or instability, easily leading to problems such as failure to determine a recommended driving trajectory or poorer accuracy of a recommended driving trajectory, thus resulting in poorer vehicle driving safety.

### SUMMARY

To resolve the technical problem mentioned above, embodiments of the present disclosure provide a control method and apparatus for a vehicle, an electronic device, and a storage medium, to improve accuracy of a recommended driving trajectory and thus improve vehicle driving safety.

According to a first aspect of the present disclosure, there is provided a control method for a vehicle, including: acquiring a first image captured by a camera with a preset viewing angle mounted on the vehicle; transforming the first image into a second image in bird's-eye view; determining, based on the second image, a first predicted driving trajectory of the vehicle in a local coordinate system; correcting the first predicted driving trajectory based on observation information corresponding to the first image to obtain a second predicted driving trajectory; and controlling a driving state of the vehicle based on the second predicted driving trajectory.

According to a second aspect of the present disclosure, there is provided a control apparatus for a vehicle, including: an acquisition module, configured for acquiring a first image captured by a camera with a preset viewing angle mounted on the vehicle; a first processing module, configured for transforming the first image into a second image in bird's-eye view; a second processing module, configured for determining, based on the second image, a first predicted driving trajectory of the vehicle in a local coordinate system; a third processing module, configured for correcting the first predicted driving trajectory based on observation information corresponding to the first image to obtain a second predicted driving trajectory; and a fourth processing module, configured for controlling a driving state of the vehicle based on the second predicted driving trajectory.

According to a third aspect of the present disclosure, there is provided a non-transitory computer readable storage medium, on which a computer program is stored, where the computer program, when executed by a processor, causes the processor to implement the control method for the vehicle according to any one of the above embodiments of the present disclosure.

According to a fourth aspect of the present disclosure, there is provided an electronic device, including: a processor; and a memory configured for storing instructions executable by the processor, where the processor is configured for reading the executable instructions from the memory, and executing the instructions to implement the control method for the vehicle according to any one of the above embodiments of the present disclosure.

According to a fifth aspect of the present disclosure, there is provided a computer program product, where instructions stored in the computer program product, when executed by a processor, cause the processor to implement the control method for the vehicle according to any one of the above embodiments of the present disclosure.

Based on the control method and apparatus for a vehicle, the electronic device, and the storage medium that are provided in the embodiments of the present disclosure, a first image captured by a camera with a preset viewing angle is transformed into a bird's-eye view image (i.e., a second image in bird's-eye view), and the bird's-eye view image may more effectively represent an overall situation of a surrounding environment of an ego vehicle. Therefore, an effective first predicted driving trajectory may be obtained based on the bird's-eye view image, and then the obtained first predicted driving trajectory may be corrected based on structured observation information from the first image that is capable of representing a real road trend, such as lane lines, curbs, and driving trajectories of other vehicles around the ego vehicle, which may greatly improve accuracy and effectiveness of a recommended driving trajectory, thereby improving vehicle driving safety.

### BRIEF DESCRIPTION OF DRAWINGS

FIG. 1 illustrates an exemplary application scenario of a control method for a vehicle according to the present disclosure;
FIG. 2 is a schematic flowchart illustrating a control method for a vehicle according to an exemplary embodiment of the present disclosure;
FIG. 3 is a schematic flowchart illustrating a control method for a vehicle according to another exemplary embodiment of the present disclosure;
FIG. 4 is a schematic flowchart illustrating a control method for a vehicle according to still another exemplary embodiment of the present disclosure;
FIG. 5 is a schematic flowchart illustrating a control method for a vehicle according to yet another exemplary embodiment of the present disclosure;
FIG. 6 is a schematic flowchart for determining a recommended driving trajectory according to an exemplary embodiment of the present disclosure;
FIG. 7 is a schematic diagram illustrating determining of a first predicted driving trajectory according to an exemplary embodiment of the present disclosure;
FIG. 8 is a schematic diagram illustrating obtaining of a to-be-corrected predicted driving trajectory by multi-frame fusion according to an exemplary embodiment of the present disclosure;
FIG. 9 is a schematic flowchart for determining a to-be-corrected predicted driving trajectory according to an exemplary embodiment of the present disclosure;
FIG. 10 is a schematic flowchart for correcting a predicted driving trajectory according to an exemplary embodiment of the present disclosure;
FIG. 11 is a schematic diagram illustrating observation information according to an exemplary embodiment of the present disclosure;
FIG. 12 is a schematic flowchart for determining a second predicted driving trajectory based on a constraint point according to an exemplary embodiment of the present disclosure;
FIG. 13 is a schematic diagram illustrating a piecewise cubic curve according to an exemplary embodiment of the present disclosure;
FIG. 14 is a schematic diagram illustrating a structure of a control apparatus for a vehicle according to an exemplary embodiment of the present disclosure;
FIG. 15 is a schematic diagram illustrating a structure of a control apparatus for a vehicle according to another exemplary embodiment of the present disclosure;
FIG. 16 is a schematic diagram illustrating a structure of a control apparatus for a vehicle according to still another exemplary embodiment of the present disclosure; and
FIG. 17 is a diagram illustrating a structure of an electronic device according to an embodiment of the present disclosure.

### DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that, the present disclosure is not limited by the exemplary embodiments.

It should be noted that the relative arrangement of components and steps, numerical expressions, and numerical values set forth in these embodiments do not limit the scope of the present disclosure, unless otherwise specifically stated.

### Overview of Disclosure

In a process of implementing the present disclosure, the inventors found that in technical fields such as assisted driving, a visual perception solution typically includes front-view recommended driving trajectory (which may be referred to as driveline) perception technology. In related technologies, there is often heavy reliance on lane line detection to determine a recommended driving trajectory. However, in scenarios such as badly worn road markings, severe road congestion and occlusions, and complex changes in intersections and lane numbers, lane line detection is prone to omission or instability easily leading to problems such as failure to determine a recommended driving trajectory or poorer accuracy of a recommended driving trajectory, thus resulting in poorer vehicle driving safety. For example, in an intersection scenario, lane lines on both sides of an intersection are typically extended and then matching is performed on the extended lane lines from the both sides. If the matching succeeds, virtual lane lines are generated, as lane boundaries for vehicle driving, based on the successfully matched extended lines on the both sides to obtain a recommended driving trajectory, for subsequent decision-making and control. However, for the lane line extension solution, on the one hand, there is a relatively high probability of mismatching for intersections with large spans or misaligned angles; and on the other hand, a detection effect is relatively poor for lane lines on the opposite side of the intersection that are far away from an ego vehicle, and it is typically difficult to match successfully, resulting in failure to obtain an effective recommended driving trajectory.

### Exemplary Overview

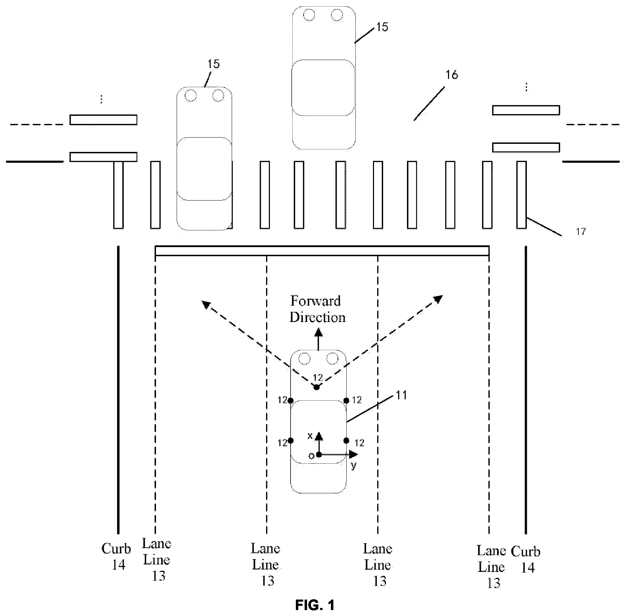

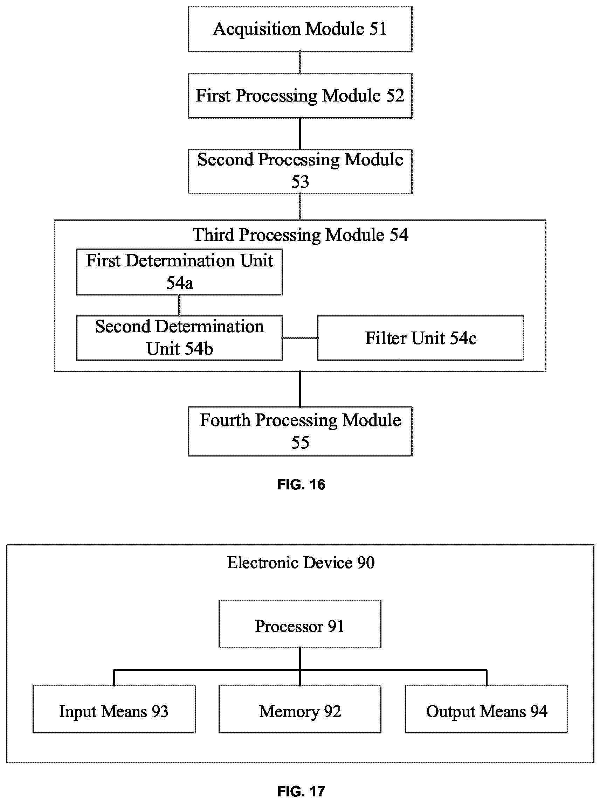

FIG. 1 illustrates an exemplary application scenario of a control method for a vehicle according to the present disclosure. As shown in FIG. 1, the vehicle (i.e., an ego vehicle) 11 may be provided with cameras 12 with one or more respective viewing angles. During driving of the vehicle 11, environmental images around the vehicle may be captured by the cameras 12 with respective viewing angles. Through the control method for the vehicle of the present disclosure, a first image captured by the camera 12 with a preset viewing angle (for example, a front viewing angle) on the vehicle 11 may be acquired; the first image may be transformed into a second image from in bird's-eye view (BEV for short, or also referred to as BEV perspective); and then, a first predicted driving trajectory in a local coordinate system (for example, an xoy coordinate system shown in the figure) for the vehicle may be determined based on the second image; the first predicted driving trajectory may be corrected based on observation information corresponding to the first image to obtain a corrected predicted driving trajectory as a second predicted driving trajectory; and a driving state of the vehicle 11 may be controlled based on the second predicted driving trajectory. Because the second image is a bird's-eye view image, which may more effectively represent an overall situation of a surrounding environment of the ego vehicle 11, an effective first predicted driving trajectory may be obtained based on the bird's-eye view image, and then the obtained first predicted driving trajectory is corrected based on structured observation information from the first image that is capable of representing a real road trend, such as lane lines 13, curbs 14, and driving trajectories of other vehicles 15 around the ego vehicle 11, to obtain the second predicted driving trajectory, as a recommended driving trajectory, for controlling the driving state of the vehicle 11. In this way, accuracy and effectiveness of the recommended driving trajectory may be greatly improved, thereby improving driving safety of the vehicle 11. As shown in FIG. 1, 17 indicating a crosswalk, and 16 indicating an intersection, if the intersection 16 has a large span, the second image in bird's-eye view may more effectively represent an overall situation within a preset viewing angle range ahead of the ego vehicle 11, so that an effective first predicted driving trajectory may be obtained. Then, the first predicted driving trajectory is corrected in combination with observation information such as the lane lines 13, curbs 14, and driving trajectories of other vehicles 15 ahead of the ego vehicle 11, to obtain an accurate and effective second predicted driving trajectory, without relying on lane line detection. Therefore, even if no lane line can be detected from the opposite side of the intersection 16, or an effectiveness of lane line detection is relatively poor, an accurate and effective recommended driving trajectory can still be obtained.

### Exemplary Method

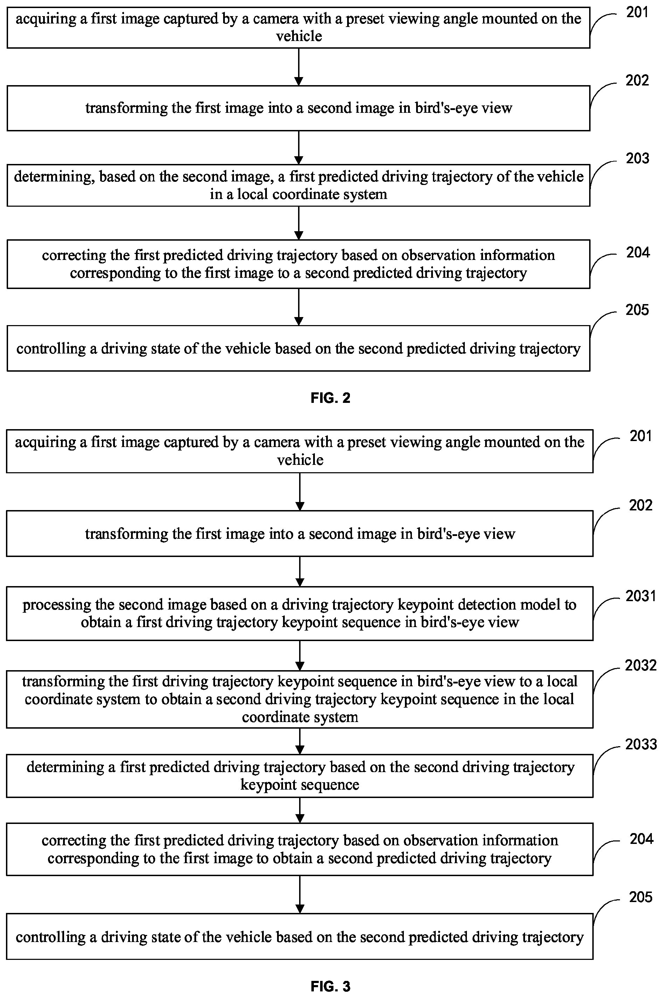

FIG. 2 is a schematic flowchart illustrating a control method for a vehicle according to an exemplary embodiment of the present disclosure. This embodiment may be applied to an electronic device, specifically, for example, an in-vehicle computing platform. As shown in FIG. 2, the method in this embodiment of the present disclosure may include steps:

Step 201: acquiring a first image captured by a camera with a preset viewing angle mounted on the vehicle.

The preset viewing angle may be a front viewing angle, or other viewing angles covering a front viewing angle range. The other viewing angles may include, for example, at least one of a left-front viewing angle and a right-front viewing angle. The camera with the preset viewing angle may be a monocular camera, a binocular camera, or the like. Correspondingly, the first image may be a monocular image or a binocular image. To reduce hardware costs, the camera with the preset viewing angle may be a monocular camera, and the first image is a monocular image.

Step 202: transforming the first image into a second image in bird's-eye view.

The second image in bird's-eye view is equivalent to an image of an overall environment within a preset viewing angle range observed from a top-down viewing angle, and may better reflect an overall situation of an environment ahead of the ego vehicle.

In some optional embodiments, the transformation from the preset viewing angle to the bird's-eye view may be implemented in any implementable manner. For example, the first image may be transformed into the second image in bird's-eye view through inverse perspective mapping (IPM), which may be implemented based on dynamically estimated camera extrinsic parameters which may be completed by an extrinsic parameter estimation module on the vehicle without limitation in the embodiments of the present disclosure. For another example, the first image may be transformed into the second image in bird's-eye view through a neural network model. A specific transformation approach is not limited.

Step 203: determining, based on the second image, a first predicted driving trajectory of the vehicle in a local coordinate system.

The local coordinate system may be a coordinate system with a preset position (e.g., a center of a rear axle) on the ego vehicle as an origin. Compared with a global coordinate system (for example, a world coordinate system, or an ego-vehicle coordinate system based on an initial position of the vehicle), the origin and axis directions of the local coordinate system change with changes in of the ego-vehicle's pose.

In some optional embodiments, a bird's-eye view-perspective driving trajectory in bird's-eye view may be predicted based on the second image, and is then transformed into the local coordinate system for the vehicle to obtain a predicted driving trajectory in the local coordinate system, that is, to obtain a first predicted driving trajectory.

In some optional embodiments, the second image may be first transformed to the local coordinate system, to obtain a third image in the local coordinate system, and then a driving trajectory in the local coordinate system for the vehicle is predicted based on the third image to obtain a first predicted driving trajectory. The first predicted driving trajectory may be used as a to-be-corrected predicted driving trajectory.

In some optional embodiments, a driving trajectory prediction may be performed based on any implementable neural network model to obtain a first predicted driving trajectory. The neural network model may include, for example, Convolutional Neural Network (CNN)-based series models, Recurrent Neural Network (RNN)-based series models, Long Short-Term Memory (LSTM)-based series models, etc. The CNN-based series models may include Transformer-based models and series models, Residual Network (ResNet)-based models and series models, etc.

Step 204: correcting the first predicted driving trajectory based on observation information corresponding to the first image to obtain a second predicted driving trajectory.

The observation information corresponding to the first image may include road observation information and observation information on other surrounding vehicles, which are acquired through perception in the local coordinate system, or the like. The road observation information may include at least one of observation quantities: a lane line curve and a curb curve obtained based on object detection, a lane line point sequence and a curb point sequence obtained based on semantic segmentation, and the like. The observation information on other surrounding vehicles may include an observation of a driving trajectory point sequence of another vehicle (which may be referred to as a surrounding vehicle trajectory point sequence for short). These road observation quantities may reflect a real road trend within a front range of the ego vehicle. Therefore, the first predicted driving trajectory may be corrected based on at least one of these observation quantities of the observation information to obtain a corrected predicted driving trajectory as the second predicted driving trajectory, so that the second predicted driving trajectory is capable of better conforming to a real road trend, thereby improving accuracy and effectiveness of a predicted driving trajectory. Moreover, since model prediction may not fully ensure safety, possibly resulting in situations where the first predicted driving trajectory hits a curb, deviates from a main road, or erroneously leads to an opposite lane or non-motor vehicle lane. The correction using the observation information corresponding to the first image may effectively identify these situations and improve the safety of the predicted driving trajectory.

Step 205: controlling a driving state of the vehicle based on the second predicted driving trajectory.

After the second predicted driving trajectory is obtained, the second predicted driving trajectory may be used as a recommended driving trajectory, for vehicle planning and controlling, to control the driving state of the vehicle. Specifically, the second predicted driving trajectory may be used as a future driving trajectory of the vehicle, and a control instruction for the vehicle may be generated based on the second predicted driving trajectory. The control instruction may include a lateral control instruction, a longitudinal control instruction, and the like for the vehicle. A lateral and longitudinal driving state of the vehicle may be controlled through the control instruction. Specific applications of the second predicted driving trajectory in subsequent decision-making and control are not limited.

According to the control method for the vehicle provided in this embodiment, a first image captured by a camera with a preset viewing angle is transformed into a bird's-eye view image (i.e., a second image in bird's-eye view), and the bird's-eye view image may more effectively represent an overall situation of a surrounding environment of an ego vehicle. Therefore, an effective first predicted driving trajectory may be obtained based on the bird's-eye view image, and then the obtained first predicted driving trajectory may be corrected based on structured observation information from the first image that is capable of representing a real road trend, such as lane lines, curbs, and driving trajectories of other vehicles around the ego vehicle, which may greatly improve accuracy and effectiveness of a recommended driving trajectory, thereby improving vehicle driving safety.

FIG. 3 is a schematic flowchart illustrating a control method for a vehicle according to another exemplary embodiment of the present disclosure.

In some optional embodiments, as shown in FIG. 3, based on the embodiment shown in FIG. 2, step 203 of determining, based on the second image, a first predicted driving trajectory of the vehicle in a local coordinate system may include steps:
Step 2031: processing the second image based on a driving trajectory keypoint detection model to obtain a first driving trajectory keypoint sequence in bird's-eye view.

The driving trajectory keypoint detection model may employ CNN-based series models, RNN-based series models, LSTM-based series models, etc. By processing the second image through the driving trajectory keypoint detection model to obtain the first driving trajectory keypoint sequence in bird's-eye view. The first driving trajectory keypoint sequence may include a group of driving trajectory points in bird's-eye view obtained through model prediction. The driving trajectory keypoint detection model may be a pre-trained model.

In some optional embodiments, the driving trajectory keypoint detection model may use a stack-hourglass-based keypoint detection network architecture. The first driving trajectory keypoint sequence obtained through detection is a two-dimensional pixel coordinate point sequence on the bird's-eye view image.

In some optional embodiments, training data for the driving trajectory keypoint detection model may include a bird's-eye view image obtained through image acquisition by the vehicle, lane line true values corresponding to the bird's-eye view image, navigation line data from a high-definition map, and a screened out vehicle motion trajectory conforming to the road trend.

Step 2032: transforming the first driving trajectory keypoint sequence in bird's-eye view to the local coordinate system to obtain a second driving trajectory keypoint sequence in the local coordinate system.

The first driving trajectory keypoint sequence may be transformed in bird's-eye view to the local coordinate system based on a transformation relationship between a coordinate system corresponding to the bird's-eye view and the local coordinate system for the vehicle to obtain a second driving trajectory keypoint sequence in the local coordinate system. The transformation relationship between the coordinate system corresponding to the bird's-eye view and the local coordinate system for the vehicle may be obtained based on extrinsic and intrinsic parameters of an observation camera corresponding to the bird's-eye view.

Step 2033: determining the first predicted driving trajectory based on the second driving trajectory keypoint sequence.

Curve fitting may be performed on the second driving trajectory keypoint sequence to obtain the first predicted driving trajectory.

In some optional embodiments, post-processing may also be performed on the second driving trajectory keypoint sequence to improve effectiveness of the driving trajectory keypoint sequence. The first predicted driving trajectory is determined based on the post-processed driving trajectory keypoint sequence. The post-processing may include at least one of outlier removal, non-maximum suppression (NMS), and the like.

In this embodiment, because the second image is an bird's-eye view image, it is capable of better reflecting an overall situation of an environment within the preset viewing angle range of the ego vehicle, and then, through processing the second image by the driving trajectory keypoint detection model, an effective driving trajectory keypoint sequence may be obtained through detection from the second image, thereby improving the accuracy and effectiveness of the first predicted driving trajectory.

In some optional embodiments, step 2033 of determining the first predicted driving trajectory based on the second driving trajectory keypoint sequence may include:
performing outlier removal and NMS processing on the second driving trajectory keypoint sequence to obtain a third driving trajectory keypoint sequence, which is the post-processed driving trajectory keypoint sequence; and performing curve fitting on the third driving trajectory keypoint sequence to obtain the first predicted driving trajectory.

The outlier removal may refer to removal of outlier points. The NMS may refer to extracting the most representative point from a plurality of repetitively predicted points while ignoring other repetitively predicted points. The repetitively predicted points may be multiple points with different lateral distances detected at a same longitudinal distance by the driving trajectory keypoint detection model during keypoint detection.

In some optional embodiments, the driving trajectory keypoint detection model may further output a confidence level for each keypoint in the first driving trajectory keypoint sequence when the first driving trajectory keypoint sequence is obtained through detection. Outliers may be removed based on the confidence level for each keypoint and a confidence threshold. Specifically, a keypoint with a confidence level lower than the confidence threshold may be removed as an outlier.

In some optional embodiments, an order of processing outlier removal and NMS is not limited. Outliers may be removed first, and then NMS processing may be performed, or NMS processing may be performed first, and then outliers may be removed.

In some optional embodiments, before outlier removal and NMS processing are performed on the second driving trajectory keypoint sequence, clustering may also be performed on the second driving trajectory keypoint sequence to obtain a plurality of clusters, where an optimal cluster is selected from the plurality of clusters as the second driving trajectory keypoint sequence, thereby further improving the accuracy and effectiveness of the driving trajectory keypoint. Then, outlier removal and NMS processing are performed on the second driving trajectory keypoint sequence to obtain a third driving trajectory keypoint sequence.

In some optional embodiments, a cubic curve may be used to perform curve fitting on the third driving trajectory keypoint sequence to obtain a first predicted driving trajectory. Specifically, an optimal cubic curve coefficient may be solved based on the third driving trajectory keypoint sequence by any optimization approach, and the first predicted driving trajectory may be obtained based on the optimal cubic curve coefficient. The optimization algorithm may include, for example, the least squares approach and any other implementable optimization approach.

In this embodiment, through outlier removal and NMS processing, the accuracy and effectiveness of the driving trajectory keypoint sequence may be improved, thereby further improving the accuracy of the first predicted driving trajectory.

In some optional embodiments, after step 2031 of processing the second image based on a driving trajectory keypoint detection model to obtain a first driving trajectory keypoint sequence in bird's-eye view, outlier removal and NMS processing may be performed on the first driving trajectory keypoint sequence to obtain a third driving trajectory keypoint sequence, which is the post-processed driving trajectory keypoint sequence; then, the third driving trajectory keypoint sequence is transformed in bird's-eye view to the local coordinate system to obtain a second driving trajectory keypoint sequence in the local coordinate system; and curve fitting is performed on the second driving trajectory keypoint sequence to obtain a first predicted driving trajectory.

In some optional embodiments, after step 2031 of processing the second image based on a driving trajectory keypoint detection model to obtain a first driving trajectory keypoint sequence in bird's-eye view, outlier removal and NMS processing may be performed on the first driving trajectory keypoint sequence to obtain a third driving trajectory keypoint sequence, which is the post-processed driving trajectory keypoint sequence; then, curve fitting is performed on the third driving trajectory keypoint sequence to obtain a fitted trajectory; and the fitted trajectory is transformed in bird's-eye view to the local coordinate system to obtain a first predicted driving trajectory in the local coordinate system.

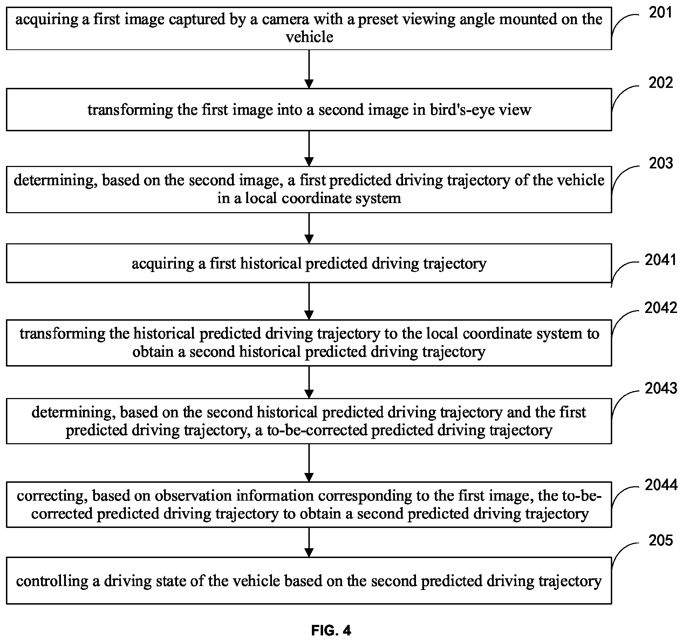

FIG. 4 is a schematic flowchart illustrating a control method for a vehicle according to still another exemplary embodiment of the present disclosure.

In some optional embodiments, as shown in FIG. 4, based on the embodiment shown in FIG. 2, step 204 of correcting the first predicted driving trajectory based on observation information corresponding to the first image to obtain a corrected predicted driving trajectory as a second predicted driving trajectory may include:
Step 2041: acquiring a first historical predicted driving trajectory.

The first historical predicted driving trajectory may be a corrected predicted driving trajectory obtained by processing (the processing process may be consistent with step 201 to step 204) an image of a historical frame. The image of the historical frame may be an image captured by the camera with the preset viewing angle at a moment corresponding to the historical frame. That is, the first historical predicted driving trajectory is a second predicted driving trajectory obtained according to step 201 to step 204 based on the captured first image at a moment of the historical frame. In this case, the first historical predicted driving trajectory is a driving trajectory in a historical local coordinate system for the vehicle that corresponds to the historical frame.

In some optional embodiments, one or more frames of first historical predicted driving trajectories may be obtained. In an implementation, there may be one more frames of historical predicted driving trajectories, and the one or more frames of first historical predicted driving trajectories may be obtained from the one more frames of historical predicted driving trajectories.

In some optional embodiments, a number of frames of historical predicted driving trajectories may be controlled by a sliding window. For example, a preset number of frames may be set for the sliding window, where the preset number of frames include a current frame and a first number of historical frames, so that the current frame of first predicted driving trajectory and the first number of historical frames of first historical predicted driving trajectories are always maintained in the sliding window. Whenever a new frame of first predicted driving trajectory is generated, an earliest historical frame of first historical predicted driving trajectory is slid out of the sliding window to ensure timeliness of an involved historical predicted driving trajectory.

Step 2042: transforming the historical predicted driving trajectory to the local coordinate system to obtain a second historical predicted driving trajectory.

The local coordinate system is a local coordinate system for the current frame. That is, the first historical predicted driving trajectory is transformed from a historical local coordinate system for a historical frame to a local coordinate system for the current frame. For a first historical predicted driving trajectory of any historical frame, the first historical predicted driving trajectory may be transformed from the historical local coordinate system for the historical frame to the local coordinate system for the current frame based on a transformation relationship between the historical local coordinate system corresponding to the historical frame and the global coordinate system, and a transformation relationship between the global coordinate system and the local coordinate system for the current frame, to obtain a second historical predicted driving trajectory corresponding to the first historical predicted driving trajectory. The transformation relationship between the historical local coordinate system and the global coordinate system may be obtained during processing of the historical frame. The transformation relationship between the local coordinate system for the current frame and the global coordinate system may be obtained through localization of the vehicle based on vehicle chassis information for the current frame. The vehicle chassis information may include odometer information of the vehicle, such as a velocity, acceleration, an angular velocity, and a position.

Step 2043: determining, based on the second historical predicted driving trajectory and the first predicted driving trajectory, a to-be-corrected predicted driving trajectory.

The to-be-corrected predicted driving trajectory may be determined based on a combination of the second historical predicted driving trajectory and the first predicted driving trajectory (the second historical predicted driving trajectory and the first predicted driving trajectory may be briefly referred to as the predicted driving trajectories). Since a predicted driving trajectory is a trajectory curve, and a plurality of consecutive frames of predicted driving trajectories typically have an overlapping part in a longitudinal direction, which may reflect a prediction result of each of the frames for the overlapping part. Therefore, a to-be-corrected predicted driving trajectory with a higher confidence level may be determined based on a combination of the plurality of frames of predicted driving trajectories, thereby improving accuracy and effectiveness of the to-be-corrected predicted driving trajectory.

In some optional embodiments, the to-be-corrected predicted driving trajectory may be determined based on a lateral distribution state of the predicted driving trajectories. For example, target predicted driving trajectories, which are concentratedly distributed, among the predicted driving trajectories may be determined based on the lateral distribution state, and the concentratedly distributed target predicted driving trajectories may be fused into one to-be-corrected predicted driving trajectory.

Step 2044: correcting, based on the observation information corresponding to the first image, the to-be-corrected predicted driving trajectory to obtain the second predicted driving trajectory.

The correcting the to-be-corrected predicted driving trajectory based on the observation information is similar to the specific operation of correcting the first predicted driving trajectory, and details are not repeated herein.

In this embodiment, a plurality of consecutive frames of predicted driving trajectories typically have overlapping parts in a longitudinal direction, which may reflect a prediction result of each of the frames for the overlapping part. Therefore, a to-be-corrected predicted driving trajectory with a higher confidence level may be determined based on the combination of a plurality of frames of historical predicted driving trajectories and the current frame of first predicted driving trajectory, thereby improving accuracy and effectiveness of the to-be-corrected predicted driving trajectory.

In some optional embodiments, step 2043 of determining, based on the second historical predicted driving trajectory and the first predicted driving trajectory, a to-be-corrected predicted driving trajectory may include:
performing clustering on the second historical predicted driving trajectory and the first predicted driving trajectory to obtain a clustering result, where the clustering result includes at least one cluster; determining, based on the clustering result, a target cluster satisfying a preset condition from the at least one cluster; and performing fusion on predicted driving trajectories in the target cluster to obtain the to-be-corrected predicted driving trajectory.

Any implementable clustering approach may be used to perform clustering on the predicted driving trajectories. The clustering approach may be, for example, K-Means or other approaches. Clustering may be performed based on lateral distances for sampling points at a plurality of longitudinal distances on the predicted driving trajectories. The longitudinal distance may refer to a distance between the sampling point and the ego vehicle in a longitudinal direction. The lateral distance may refer to a distance between the sampling point and the ego vehicle in a lateral direction. Because the predicted driving trajectories are all trajectories in the local coordinate system for the current frame, the longitudinal distance may be represented by a longitudinal coordinate of the sampling point, and the lateral distance may be represented by a lateral coordinate of the sampling point. The preset condition may include that a cluster with a highest score is used as the target cluster. A score of a cluster may be obtained by scoring each of the clusters according to a scoring rule. The scoring rule may be set based on timeliness, distribution concentration, a number of trajectories of predicted driving trajectories in the cluster, and the like. For example, the scoring rule may include a timeliness weight rule, a distribution concentration calculation rule, and a composite score calculation rule on the timeliness, distribution concentration, and number of trajectories. The timeliness weight rule may be set based on a principle that more closeness to the current frame indicates a higher weight of timeliness. For example, the timeliness weight rule may be a linear function that decays over time, where weights of the respective predicted driving trajectories in the cluster are calculated based on the linear function, and a timeliness score is obtained by applying weighting. The distribution concentration calculation rule may be set based on lateral distribution widths of the predicted driving trajectories in the cluster at different longitudinal positions. A smaller lateral distribution width indicates higher distribution concentration and accordingly a higher score. Based on this, a distribution concentration score of the cluster may be obtained. For the number of trajectories, corresponding number scores may be set for different numbers, and based on this, a number score of the cluster may be obtained. The composite score calculation rule on the timeliness, distribution concentration, and number of trajectories may include applying weighting to the timeliness score, the distribution concentration score, and the number score based on weighting coefficients respectively corresponding to the timeliness score, the distribution concentration score, and the number score, to obtain a composite score. A cluster with a highest composite score is used as the target cluster. The predicted driving trajectories in the target cluster are fused into one trajectory as the to-be-corrected predicted driving trajectory.

In some optional embodiments, the fusion approach may be any implementable approach. For example, by the fusion approach, an average trajectory may be calculated as the to-be-corrected predicted driving trajectory based on the predicted driving trajectories in the target cluster. For another example, a plurality of sampling points are sampled on the predicted driving trajectories based on a plurality of longitudinal coordinates. Fusion points respectively corresponding to the longitudinal coordinates are determined based on lateral coordinates of the sampling points, and fitting is performed based on the fusion points to obtain the to-be-corrected predicted driving trajectory. For any longitudinal coordinate, lateral coordinates of sampling points corresponding to the longitudinal coordinate (that is, the sampling points have the same longitudinal coordinate) may be averaged to obtain a lateral coordinate of a fusion point corresponding to the longitudinal coordinate, where the fusion point is determined based on the longitudinal coordinate and the lateral coordinate of the fusion point. Alternatively, the sampling points corresponding to the longitudinal coordinate after outlier removal may be averaged to obtain a fusion point, thereby improving accuracy and effectiveness of the fusion point, and thus improving accuracy and effectiveness of the to-be-corrected predicted driving trajectory. A specific fusion approach is not limited.

In this embodiment, an optimal target cluster may be found, based on a preset condition, from a plurality of clusters obtained through clustering, and predicted driving trajectories in the target cluster better conform to a future driving trend of a current frame. Therefore, performing fusion on the predicted driving trajectories in the target cluster to obtain a to-be-corrected predicted driving trajectory may improve accuracy and effectiveness of the to-be-corrected predicted driving trajectory.

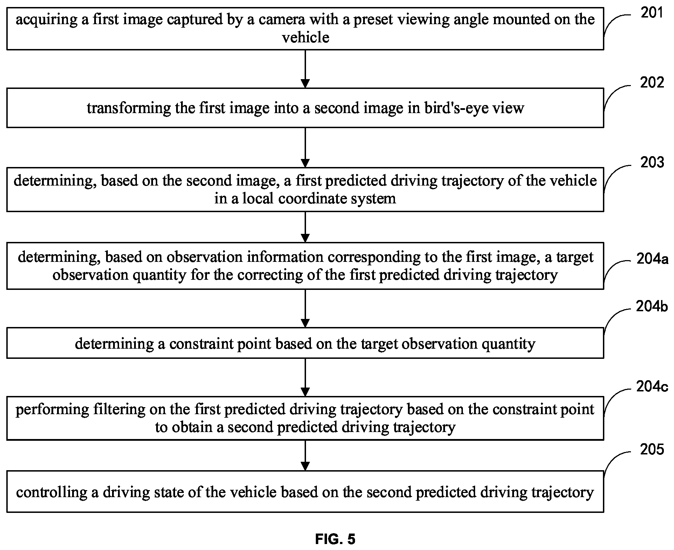

FIG. 5 is a schematic flowchart illustrating a control method for a vehicle according to yet another exemplary embodiment of the present disclosure.

In some optional embodiments, as shown in FIG. 5, based on the embodiment shown in FIG. 2, step 204 of correcting the first predicted driving trajectory based on observation information corresponding to the first image to obtain a second predicted driving trajectory may include:
Step 204a: determining, based on the observation information corresponding to the first image, a target observation quantity for the correcting of the first predicted driving trajectory.

Because the observation information may include at least one of observation quantities such as road observation information and observation information on other surrounding vehicles, a target observation quantity for the correcting of the first predicted driving trajectory may be determined from the observation information by setting a matching rule.

In some optional embodiments, the target observation quantity may include one or more observation quantities. For example, the target observation quantity may include at least one of a lane line curve and a curb curve obtained through object detection. Alternatively, the target observation quantity may include at least one of a lane line curve and a curb curve, and at least one of a lane line point sequence and a curb point sequence obtained through semantic segmentation. Alternatively, the target observation quantity may include at least one of a lane line curve and a curb curve, as well as a surrounding vehicle trajectory point sequence. Different observation quantities may be used for different constraints in a correction process. During actual application, strength of effective and corrective effects of different observation quantities may vary. For example, strength of effective and corrective effects of a lane line curve may be higher than that of a lane line point sequence.

Step 204b: determining a constraint point based on the target observation quantity.

The constraint point may be a point on a center line representing a main lane (i.e., a lane where the ego vehicle is located). The constraint point may be determined based on a relationship between the target observation quantity and the center line of the main lane. For example, for a case in which the target observation quantity is a lane line curve, a curb curve, a lane line point sequence, and a curb point sequence, the constraint point may be a point on a central line between lane lines on both sides of the main lane. For a case in which there is only curb observation information, the constraint point on the main lane may be determined based on a lateral distance between each of curbs on the both sides and the ego vehicle. For a case in which there is only a lane line on a single side, a point on the center line of the main lane may be determined based on a width of the lane and the lane line on the single side as the constraint point. For example, the lane line on the single side may be laterally translated by half a lane toward a direction of the ego vehicle based on the width of the lane to obtain the center line of the main lane, and then a point on the center line may be obtained as the constraint point. For a case in which the target observation quantity is a surrounding vehicle trajectory point sequence, when it is determined that there is no lane-changing trend for the surrounding vehicle trajectory point sequence, the surrounding vehicle trajectory point sequence may reflect a trend of the center line of the lane. Therefore, the constraint point on the center line of the main lane may be determined based on the surrounding vehicle trajectory point sequence. There may be one or more constraint points. For example, the constraint point may be a point sequence consisting of a plurality of points, and the point sequence reflects a trend of the center line of the main lane.

Step 204c: performing filtering on the first predicted driving trajectory based on the constraint point to obtain the second predicted driving trajectory.

Because the constraint point reflects the trend of the center line of the main lane, performing filtering on the first predicted driving trajectory based on the constraint point may enable the filtered second predicted driving trajectory to more approximate to the trend of the constraint point. The filtering approach may be any implementable approach. For example, the filtering approach may be an extended Kalman filter (EKF) or other filters.

In this embodiment, because the observation quantity of the observation information may reflect a real road trend, the target observation quantity for correction determined based on the observation information is used for determining a constraint point as a constraint for performing filtering on the first predicted driving trajectory, so that the filtered second predicted driving trajectory is capable of better conforming to a real trend of the main lane, thereby improving accuracy and effectiveness of the second predicted driving trajectory.

In some optional embodiments, step 204a of determining, based on the observation information corresponding to the first image, a target observation quantity for the correcting of the first predicted driving trajectory includes:
determining, based on the observation information, the target observation quantity including at least one of a lane line curve, a curb curve, a lane line point sequence, a curb point sequence, and a driving trajectory point sequence of a target vehicle, satisfying a first condition, around the vehicle in the local coordinate system. That is, the at least one of the lane line curve, the curb curve, the lane line point sequence, the curb point sequence, and the driving trajectory point sequence of a target vehicle, satisfying a first condition, around the vehicle in the local coordinate system may be determined as the target observation quantity.

The first condition may be set based on a case in which a driving trajectory of another vehicle around the ego vehicle is capable of reflecting a real trend of a lane. For example, the first condition may include that a length of a driving trajectory point sequence of the another vehicle is greater than a length threshold, the cubic curve may be used for fitting, and that there is no clear lane-changing behavior for the trajectory point sequence, to ensure that the driving trajectory point sequence of the target vehicle may accurately reflect the real trend of the lane and may be used as a constraint for a predicted driving trajectory for correction of the first predicted driving trajectory.

In this embodiment, an observation capable of reflecting an actual lane trend is used as a target observation quantity to constraint the correction of the first predicted driving trajectory, so that the corrected predicted driving trajectory better conforms to the actual lane trend, thereby improving accuracy and effectiveness of the predicted driving trajectory.

In some optional embodiments, step 204c of performing filtering on the first predicted driving trajectory based on the constraint point to obtain the second predicted driving trajectory may include:
performing EKF on the first predicted driving trajectory based on the constraint point to obtain a third predicted driving trajectory; determining, based on the third predicted driving trajectory, a first sub-trajectory curve within a first distance range nearer to the vehicle and a second sub-trajectory curve within a second distance range farther from the vehicle; and determining the second predicted driving trajectory based on the first sub-trajectory curve and the second sub-trajectory curve.

The EKF is used for correction so that a lateral deviation between a corrected predicted driving trajectory and a constraint point is gradually reduced, and the predicted driving trajectory is constantly approaching the constraint point, thereby obtaining a filtered predicted driving trajectory as the third predicted driving trajectory. The first distance range and the second distance range may be set based on a longitudinal overlap distance between two consecutive frames and a requirement for smooth connection. The first sub-trajectory curve within the first distance range may be referred to as a near-segment curve. The second sub-trajectory curve within the second distance range may be referred to as a far-segment curve. The objective of segmentation may include the following two aspects: on the one hand, the near-segment curve may be recursively deduced for two consecutive frames based on an odometer to ensure that predicted driving trajectories of the frames basically correspond to same positions in the global coordinate system, thereby reducing an impact of observation fluctuations and avoiding clear jumping phenomena. On the other hand, for the far-segment curve, an extension direction and a curve shape of the predicted driving trajectory may be timely adjusted based on the latest observation.

In some optional examples, the first distance range may be a range of 0 to 20 meters from the ego vehicle in the longitudinal direction. The second distance range may be a portion beyond 30 meters away from the ego vehicle in the longitudinal direction. A middle segment is used for a smooth transition between the near and far segments. During actual application, specific boundary values of the first distance range and the second distance range may be set based on an actual state of the vehicle and are not limited to the ranges in the above example.

In some optional embodiments, after the first sub-trajectory curve and the second sub-trajectory curve are obtained, the first sub-trajectory curve may be corrected, and the corrected near-segment curve and far-segment curve may be smoothly connected to each other obtain a second predicted driving trajectory.

In this embodiment, the third predicted driving trajectory after the performing filtering is represented in segments, so that the near-segment curve may be recursively deduced for two consecutive frames based on an odometer to ensure that predicted driving trajectories of the frames basically correspond to same positions in the global coordinate system, thereby reducing an impact of observation fluctuations and avoiding clear jumping phenomena. Moreover, for the far-segment curve, an extension direction and a curve shape of the predicted driving trajectory may be timely adjusted based on the latest observation, so that the corrected predicted driving trajectory is capable of better reflecting a real road extension trend and a connection relationship, thereby greatly improving accuracy and effectiveness of the predicted driving trajectory.

In some optional embodiments, the determining the second predicted driving trajectory based on the first sub-trajectory curve and the second sub-trajectory curve may include:
determining a first connection point from the first sub-trajectory curve; correcting the first sub-trajectory curve based on the second sub-trajectory curve to obtain a third sub-trajectory curve; determining a second connection point from the second sub-trajectory curve; determining a connection curve, satisfying a second condition, for connecting the first connection point and the second connection point; and determining the second predicted driving trajectory based on the second sub-trajectory curve, the third sub-trajectory curve, and the connection curve.

The first connection point may be an endpoint on the first sub-trajectory curve that is farther from the ego vehicle, that is, an endpoint on the first sub-trajectory curve that is nearer to the second sub-trajectory curve. For example, if the first distance range is a range of 0 to 20 meters, the first connection point may be a point on the first sub-trajectory curve at a longitudinal distance of 20 meters. The objective of correcting the first sub-trajectory curve is to make the third sub-trajectory curve (which may be referred to as a corrected near-segment curve) have a tendency to be smoothly aligned with the far-segment curve to reduce position and angle differences between the near-segment curve and the far-segment curve. Therefore, the near-segment curve is corrected based on the far-segment curve to obtain a corrected near-segment curve.

In some optional embodiments, search may be performed for a point satisfying a condition, as the second connection point, on the second sub-trajectory curve by a certain search rule. The search rule may involve a search direction, a search stride, and the like. The search direction may include directions from near to far, from far to near, and the like, where near and far refer to proximity of a longitudinal distance from the ego vehicle. The search stride may refer to a longitudinal distance stride, that is, after the search for a point is completed, a longitudinal distance for a next search point is determined based on a longitudinal distance and a longitudinal distance stride for the point, and a point at the longitudinal distance is determined as the next search point from the second sub-trajectory curve based on the longitudinal distance. For a currently found point, it may be determined, based on a preset rule, whether the found point is the second connection point. The preset rule may include a rule on whether a relationship between the found point and the first connection point satisfies a corresponding condition. The condition may include a condition satisfied by a discrepancy (or referred to as a deviation or an error) between the found point and the first connection point. The discrepancy between the found point and the first connection point may include a position difference, an angle difference, and the like. For example, the condition may include that the position difference is less than a first threshold and the angle difference is less than a second threshold. If it is determined that the currently found point satisfies the corresponding condition, the search may be ended and the currently found point may be used as the second connection point of the second sub-trajectory curve. The second connection point being found through searching may ensure the smooth connection between the near-segment curve and the far-segment curve, thereby enabling the obtained predicted driving trajectory to better support downstream planning and control.

In some optional embodiments, the second condition may include a condition for smooth connection. For example, the second condition may involve that a curve is continuous at two connection points, first-order derivatives of the curve at the two connection points are continuous, and a change amount in second-order derivatives of the curve at the two connection points is less than a threshold. The connection curve obtained based on the second condition may smoothly connect the corrected near-segment curve and the corrected far-segment curve, thereby obtaining the second predicted driving trajectory, which is smooth and continuous.

In this embodiment, the correction of the near-segment curve causes the corrected near-segment curve to have a tendency to be smoothly aligned with the far-segment curve to reduce position and angle differences between the near-segment curve and the far-segment curve, so that the near-segment curve and the far-segment curve tend to be consistent. A road trend perceived for a far-segment is smoothly transferred to the near-segment while stability of the near-segment curve is ensured, thereby avoiding clear inconsistency between the near-segment and the far-segment caused by gradual amplification of the discrepancy between the near-segment and the far-segment, and improving smoothness of an overall segmented curve.

In some optional embodiments, the determining a second connection point from the second sub-trajectory curve includes:
Searching, in a preset direction, the second sub-trajectory curve for a sampling point to obtain a found sampling point as a current sampling point; and determining, a target point, corresponding to the current sampling point, from the third sub-trajectory curve, where a longitudinal distance for the target point relative to the vehicle is the same as a longitudinal distance for the current sampling point relative to the vehicle; determining a lateral position difference and an angle difference between the current sampling point and the target point; determining relationships of the lateral position difference and the angle difference with a third condition; and determining the second connection point based on the relationships of the lateral position difference and the angle difference with the third condition.

The preset direction may be set to a distance from near to far or from far to near based on an actual requirement. The search may be performed according to the search stride to determine the found current sampling point. The target point, corresponding to the current sampling point, on the third sub-trajectory curve refers to a point on the third sub-trajectory curve, which is at a same longitudinal distance as the current sampling point, that is, the longitudinal distance for the current sampling point relative to the vehicle is the same as the longitudinal distance for the target point relative to the vehicle. The lateral position difference is an absolute value of a difference between a lateral coordinate of the current sampling point and a lateral coordinate of the target point. The angle difference may refer to an absolute value of a difference between an angle in a tangent line direction at the current sampling point and an angle in a tangent line direction at the target point. The third condition may include a condition satisfied by the lateral position difference and a longitudinal distance, and a condition satisfied by the angle difference and the longitudinal distance. The longitudinal distance in the third condition may refer to a longitudinal distance between the target point and the first connection point. The condition satisfied by the lateral position difference and the longitudinal distance may be that a ratio of the lateral position difference to the longitudinal distance is less than the first threshold. The condition satisfied by the angle difference and the longitudinal distance may be that a ratio of the angle difference to the longitudinal distance is less than the second threshold. The first threshold and the second threshold are preset values. The relationships of the lateral position difference and the angle difference with the third condition may include whether the lateral position difference and the angle difference satisfy the third condition. If it is determined that the lateral position difference and the angle difference satisfy the third condition, the search may be ended, and the current sampling point is determined as the second connection point; and otherwise, a search may continue for a next sampling point, until the second connection point is found.

In this embodiment, the search for the second connection point is guided by the lateral position difference and the angle difference, so that the found second connection point has a relatively small discrepancy with the corrected near-segment curve, thereby improving smoothness of the connection between the corrected near-segment curve and the far-segment curve and the integrity of the entire predicted driving trajectory.

In some optional embodiments, step 2044 of correcting, based on the observation information corresponding to the first image, the to-be-corrected predicted driving trajectory to obtain the second predicted driving trajectory may include: determining, based on the observation information corresponding to the first image, a target observation quantity for the correcting of the to-be-corrected predicted driving trajectory; determining a constraint point based on the target observation quantity; and performing filtering on the to-be-corrected predicted driving trajectory based on the constraint point to obtain the second predicted driving trajectory. Herein, for specific operations of the steps, reference may be made to the above embodiments of correcting the first predicted driving trajectory, and details are not described herein again.

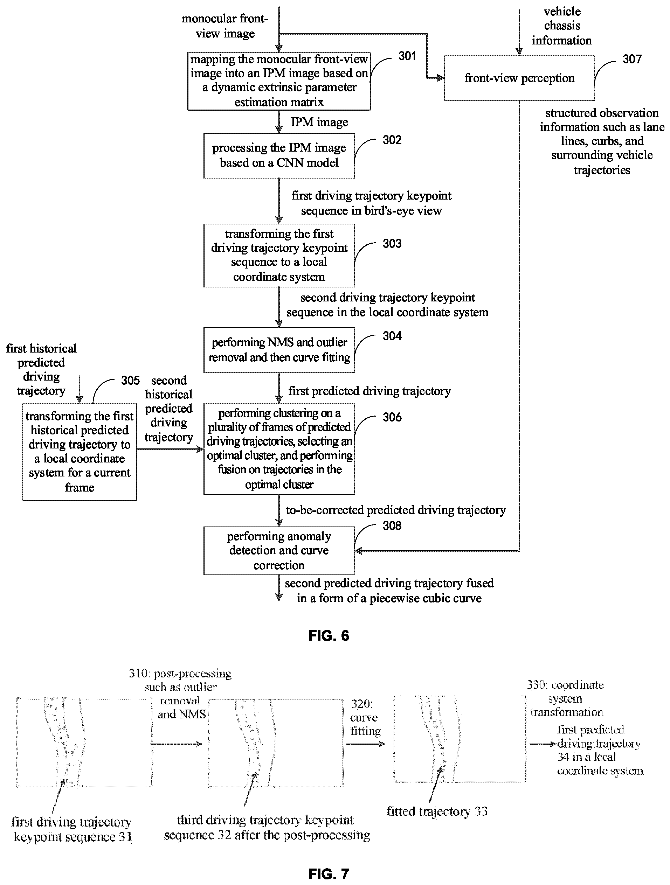

In some optional embodiments, FIG. 6 is a schematic flowchart for determining a recommended driving trajectory according to an exemplary embodiment of the present disclosure. As shown in FIG. 6, for example, the first image from the preset viewing angle is a monocular front-view image, and a procedure for determining a recommended driving trajectory in this embodiment of the present disclosure may include steps:
Step 301: mapping a monocular front-view image into an IPM image based on a dynamic extrinsic parameter estimation matrix, where the IPM image is a second image in bird's-eye view.
Step 302: processing the IPM image through a CNN model to obtain a first driving trajectory keypoint sequence in bird's-eye view.
Step 303: transforming the first driving trajectory keypoint sequence to a local coordinate system to obtain a second driving trajectory keypoint sequence in the local coordinate system.
Step 304: performing NMS and outlier removal processing and then curve fitting on the second driving trajectory keypoint sequence to obtain a first predicted driving trajectory.
Step 305: transforming one or more frames of first historical predicted driving trajectories to a local coordinate system for a current frame (i.e., a frame corresponding to the monocular front-view image) to obtain a second historical predicted driving trajectory in the local coordinate system.
   During actual application, step 305 and steps 301 to 304 may be performed in any order, as long as the second historical predicted driving trajectory in the local coordinate system is obtained before step 306.
Step 306: performing clustering on a plurality of frames of predicted driving trajectories of the first predicted driving trajectory and the second historical predicted driving trajectory, selecting an optimal cluster, and performing fusion on predicted driving trajectories in the optimal cluster to obtain a to-be-corrected predicted driving trajectory.
Step 307: performing front-view perception based on the monocular front-view image and vehicle chassis information to obtain structured observation information such as lane lines, curbs, and surrounding vehicle trajectories.

During actual application, step 307 and steps 301 to 306 may be performed in any order, as long as the observation information is obtained before step 308.

Step 308: performing anomaly detection and curve correction on the to-be-corrected predicted driving trajectory based on the observation information to obtain a second predicted driving trajectory.

According to the method in this embodiment of the present disclosure, an accurate and effective driving trajectory for vehicle driving may be recommended based on a monocular front-view image in combination with vehicle chassis information without relying on high-cost sensors such as lidar and binocular cameras, thereby achieving effective recommendation of a driving trajectory based on relatively low hardware costs.

In some optional embodiments, FIG. 7 is a schematic diagram illustrating determining of a first predicted driving trajectory according to an exemplary embodiment of the present disclosure. As shown in FIG. 7, after a CNN model outputs a first driving trajectory keypoint sequence 31, outlier removal and NMS processing in step 310 are performed on the first driving trajectory keypoint sequence 31 to obtain a post-processed driving trajectory keypoint sequence as a third driving trajectory keypoint sequence 32, and then curve fitting in step 320 is performed on the third driving trajectory keypoint sequence 32 to obtain a fitted trajectory 33. The coordinate system transformation in step 330 is performed on the fitted trajectory 33 to transform the fitted trajectory 33 in bird's-eye view to a local coordinate system to obtain a first predicted driving trajectory 34 in the local coordinate system.

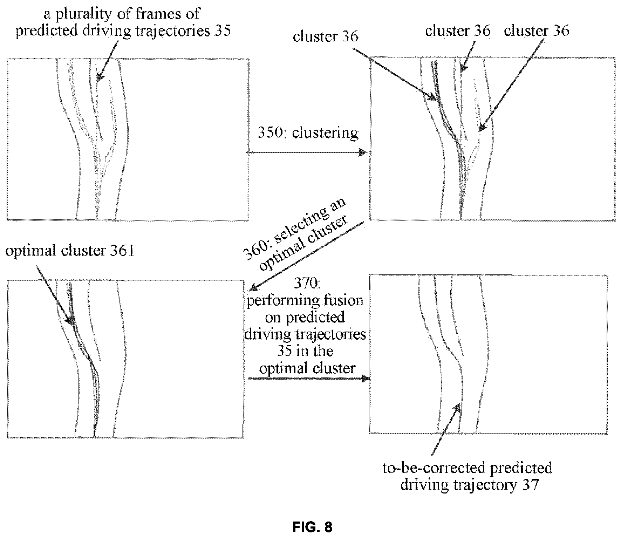

In some optional embodiments, FIG. 8 is a schematic diagram illustrating obtaining of a to-be-corrected predicted driving trajectory by multi-frame fusion according to an exemplary embodiment of the present disclosure. As shown in FIG. 8, after a plurality of frames of predicted driving trajectories 35 are obtained based on a current frame of first predicted driving trajectory and a historical frame of a second historical predicted driving trajectory that is transformed to a local coordinate system for the current frame, fusion may be performed on the plurality of frames of predicted driving trajectories 35. Performing fusion on a plurality of frames may include steps:
Step 350: performing clustering on the plurality of frames of predicted driving trajectories 35 based on lateral distances for sampling points on the predicted driving trajectories 35 at a same longitudinal coordinate to obtain a plurality of clusters 36.
Step 360: scoring the clusters 36 based on factors such as timeliness, distribution concentration, and a number of trajectories of the predicted driving trajectories 35 in each of the clusters 36, and selecting an optimal cluster (i.e., a target cluster) 361 based on the scores of the clusters 36.
Step 370: performing fusion on the predicted driving trajectories 35 in the optimal cluster 361 to obtain a fused trajectory 37, where the fused trajectory 37 is used as a to-be-corrected predicted driving trajectory 37.

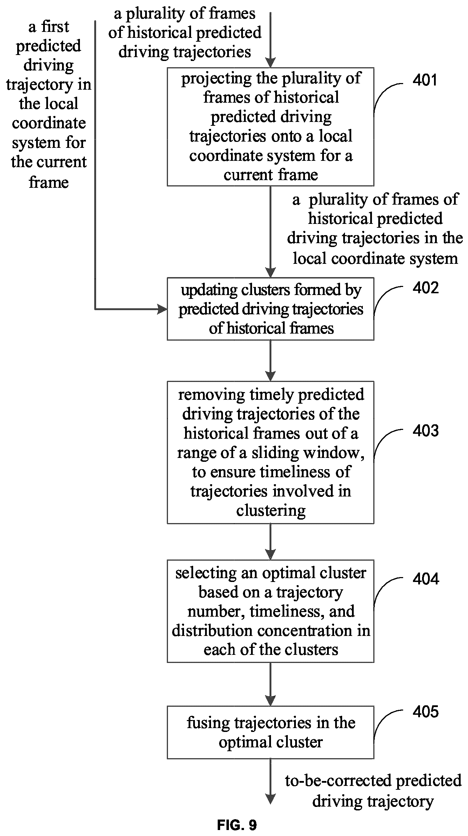

In some optional embodiments, FIG. 9 is a schematic flowchart for determining a to-be-corrected predicted driving trajectory according to an exemplary embodiment of the present disclosure. As shown in FIG. 9, a procedure for determining the to-be-corrected predicted driving trajectory may include steps:
Step 401: projecting a plurality of frames of historical predicted driving trajectories onto a local coordinate system for a current frame to obtain a plurality of frames of historical predicted driving trajectories in the local coordinate system.
Step 402: performing clustering based on a first predicted driving trajectory and the plurality of frames of historical predicted driving trajectories in the local coordinate system for the current frame, and updating clusters formed in historical frames.
Step 403: removing timely predicted driving trajectories of the historical frames out of a range of a sliding window, to ensure timeliness of trajectories involved in clustering (i.e., predicted driving trajectories) and effectiveness of the number of the trajectories.
Step 404: selecting an optimal cluster based on a trajectory number, timeliness, distribution concentration in each of the clusters, and the like.
Step 405: performing fusion on trajectories in the optimal cluster to obtain a fused trajectory as a to-be-corrected predicted driving trajectory.

In this embodiment, predicted driving trajectories of a current frame are involved in clustering, clusters formed in historical frames are updated, and trajectories in the historical frames out of a range of a sliding window range are removed timely, so that timeliness of the trajectories involved in clustering and effectiveness of the number of trajectories may be ensured, thereby further improving accuracy of a to-be-corrected predicted driving trajectory.

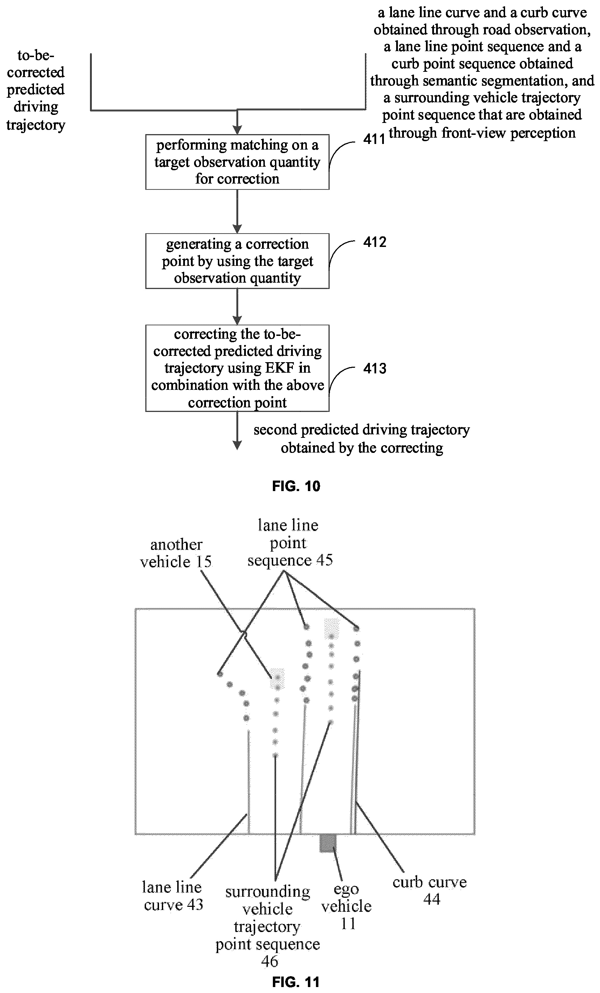

In some optional embodiments, FIG. 10 is a schematic flowchart for correcting a predicted driving trajectory according to an exemplary embodiment of the present disclosure. As shown in FIG. 10,the correcting may include steps:
Step 411: performing matching on a target observation quantity for correction based on a to-be-corrected predicted driving trajectory and observation information obtained through front-view perception. The observation information may include a lane line curve and a curb curve obtained through road observation, a lane line point sequence and a curb point sequence obtained through semantic segmentation, and a surrounding vehicle trajectory point sequence. A surrounding vehicle is another vehicle around the ego vehicle.
Step 412: generating a correction point (i.e., a constraint point) by using the target observation quantity.
Step 413: correcting the to-be-corrected predicted driving trajectory using EKF in combination with the above correction point to obtain a second predicted driving trajectory.

In this embodiment, a to-be-corrected predicted driving trajectory is corrected through EKF under constraint of a correction point, where the correction point is generated based on observation information that is capable of reflecting a real road trend, such as a lane line curve, a curb curve, a lane line point sequence, a curb point sequence, and a surrounding vehicle trajectory point sequence that are obtained through observation. Therefore, the second predicted driving trajectory which has been corrected may be enabled to better conform to the real road trend, thereby effectively improving accuracy and effectiveness of the second predicted driving trajectory.

In some optional embodiments, FIG. 11 is a schematic diagram illustrating observation information according to an exemplary embodiment of the present disclosure. As shown in FIG. 11, observation information obtained through a front-view perception system may include at least one of the following observation quantities: a lane line curve 43 and a curb curve 44 obtained through object detection, a lane line point sequence 45 obtained through semantic segmentation, a surrounding vehicle trajectory point sequence 46 obtained through obstacle detection, and the like. Then, at least one of the obtained observation quantities may be determined as a target observation quantity, for correction of a to-be-corrected predicted driving trajectory. The lane line curve 43 and the curb curve 44 may be represented by cubic curves. A correction point that better conforms to a center line of a main lane (i.e., a lane where the ego vehicle 11 is located) may be generated based on the lane line curve 43 and the curb curve 44, to more accurately reflect a position and a trend of the main lane, for constraining correction of the to-be-corrected predicted driving trajectory, or for constraining correction of a partial trajectory in the to-be-corrected predicted driving trajectory that is nearer to the ego vehicle 11, thereby preventing the predicted driving trajectory from deviating toward a lane line on one side or crossing a lane line on one side. At a position relatively farther away from the ego vehicle 11, it may not be possible that a clear lane line curve 43 and/or curb curve 44 are detected, but point sequences representing lane lines and/or curbs, that is, the lane line point sequence 45 and a curb point sequence (not shown), may be obtained by processing through semantic segmentation. Matching and confirmation may be performed on these point sequences to determine whether these point sequences are located on extension lines of left and right lane lines and left and right curbs. If it is determined that these point sequences are located on the extension lines of the left and right lane lines and the left and right curbs, correction points may be generated based on these point sequences, for correction of the to-be-corrected predicted driving trajectory, or for correction of a far-segment curve of the to-be-corrected predicted driving trajectory. At a position where road observation is seriously missing, such as where traffic is relatively dense, a portion of the surrounding vehicle trajectory point sequence 46 that satisfies a first condition may be screened out, for generating a correction point, to correct the to-be-corrected predicted driving trajectory. The first condition may be, for example, that a trajectory length is greater than a length threshold, curve fitting (for example, cubic curve fitting) may be used, and there is no clear lane changing behavior. The surrounding vehicle trajectory point sequence 46 that satisfies the first condition may reflect a road trend and may be used for correcting a local curvature of the to-be-corrected predicted driving trajectory, so that a corrected trajectory better conforms to a real road trend, thereby improving accuracy of the driving trajectory.

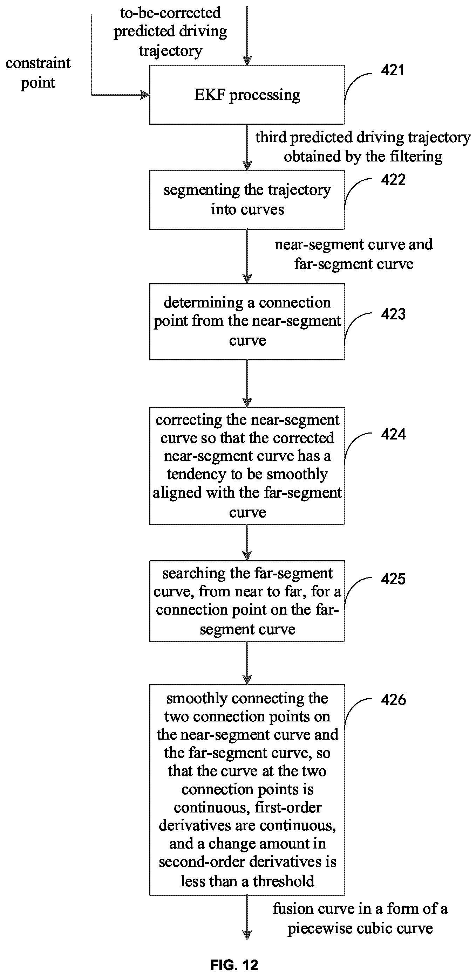

In some optional embodiments, FIG. 12 is a schematic flowchart for determining a second predicted driving trajectory based on a constraint point according to an exemplary embodiment of the present disclosure. As shown in FIG. 12, this procedure may include steps:
Step 421: performing EKF on a to-be-corrected predicted driving trajectory based on a constraint point to obtain a third predicted driving trajectory.
Step 422: segmenting the third predicted driving trajectory into curves based on a longitudinal distance from the ego vehicle to obtain a near-segment curve (i.e., a first sub-trajectory curve within a first distance range) and a far-segment curve (i.e., a second sub-trajectory curve within a second distance range).
Step 423: determining a connection point (i.e., a first connection point) from the near-segment curve.
Step 424: correcting the near-segment curve based on the far-segment curve so that the corrected near-segment curve (i.e., a third sub-trajectory curve) has a tendency to be smoothly aligned with the far-segment curve, and if a position of the first connection point after the correction changes, determining the changed connection point as the first connection point.
Step 425: searching, from near to far, the far-segment curve for a connection point (i.e., a second connection point) on the far-segment curve. Herein, it is taken as an example that a preset direction is from near to far, which is not a limitation on the preset direction of the embodiments of the present disclosure.
Step 426: smoothly connecting the two connection points on the corrected near-segment curve and the corrected far-segment curve, so that the curve, at the two connection points, is continuous, first-order derivatives are continuous, and a change amount in second-order derivatives is less than a threshold. That is, a connection curve, satisfying a second condition, for connecting the first connection point and the second connection point is determined, the first connection point and the second connection point are connected based on the connection curve to obtain a fusion curve in a form of a piecewise cubic curve, i.e., a fusion curve formed with the corrected near-segment curve, the connection curve, and the far-segment curve, and the fusion curve is used as the second predicted driving trajectory.

In this embodiment, by the second predicted driving trajectory in the form of a smoothly connected piecewise cubic curve, it may be ensured that the center line of the main lane can be accurately fitted at different longitudinal distances.

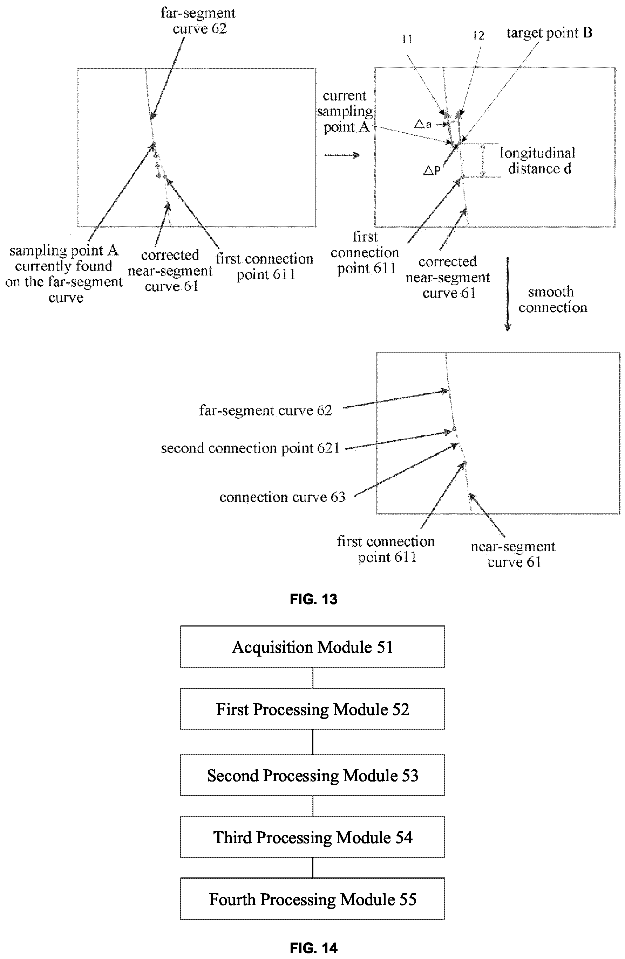

In some optional embodiments, FIG. 13 is a schematic diagram illustrating a piecewise cubic curve according to an exemplary embodiment of the present disclosure. As shown in FIG. 13, after a first connection point 611 on a corrected near-segment curve 61 is determined, search is performed on a far-segment curve 62, from near to far, for a second connection point 621. For a currently found sampling point (a current sampling point for short) A, a target point B on the corrected near-segment curve 61 is determined based on a longitudinal distance d. The target point B is typically on an extension line of the near-segment curve 61 toward the far-segment curve 62. A position difference (i.e., a lateral position difference) △P between the current sampling point A and the target point B is calculated based on lateral coordinates of the current sampling point A and the target point B. An angle difference △a between the current sampling point A and the target point B is calculated based on a tangent direction 11 at the current sampling point A and a tangent direction 12 at the target point B. Relationships of the lateral position difference △P and the angle difference △a with a third condition are determined. It is determined, based on the relationships of the lateral position difference △P and the angle difference △a with the third condition, whether the current sampling point A may be used as the second connection point 621. The third condition may include a condition satisfied by the lateral position difference △P and the longitudinal distance d, and a condition satisfied by the angle difference △a and the longitudinal distance d. The longitudinal distance d refers to a longitudinal distance between the target point B and the first connection point 611. The condition satisfied by the lateral position difference △P and the longitudinal distance d may be that a ratio of the lateral position difference △P to the longitudinal distance d is less than a first threshold. The condition satisfied by the angle difference △a and the longitudinal distance d may be that a ratio of the angle difference △a to the longitudinal distance d is less than a second threshold. The first threshold and the second threshold are preset values. If it is determined that the current sampling point A currently found is the second connection point 621, the search may be ended. Otherwise, based on a longitudinal distance stride, a found next sampling point may be determined as the current sampling point A, and it is determined, based on the above process, whether the point is the second connection point 621, and so on, until the second connection point 621 is found, and the search is ended. After the second connection point 621 is determined, the first connection point 611 and the second connection point 621 are smoothly connected to obtain a connection curve 63. A second predicted driving trajectory represented by a piecewise cubic curve is obtained based on the corrected near-segment curve 61, the connection curve 63, and the far-segment curve 62.

According to the method of this embodiment of the present disclosure, overall modeling may be performed for a vehicle driving environment by using a neural network model in combination with post-processing based on monocular front-view perception, to effectively obtain a benchmark predicted driving trajectory (i.e., a to-be-corrected predicted driving trajectory); and the benchmark predicted driving trajectory is further corrected in combination with road observation information and surrounding vehicle trajectory observation information, so that the corrected predicted driving trajectory may better conform to a real road trend in a complex road environment and better reflect an extension trend and a connection relationship of a main lane, thereby providing better road reference for subsequent planning and control of a vehicle, and improving adaptability and robustness of a vehicle driving scenario. This allows the vehicle to drive safely in various scenarios and complex scenarios. For example, in a scenario without lane lines, the vehicle may still be guided to smoothly transition from a current lane to a farther lane. Moreover, an error accumulation problem when structured observation information is missing may be alleviated. In addition, according to the method of this embodiment of the present disclosure, use of segmented trajectories in combination with multi-frame fusion may ensure inter-frame stability of a near-segment predicted trajectory and avoid left and right lateral drift and shaking. Meanwhile, extension and connection trends of the main lane are captured based on a far-segment trajectory, so that the predicted driving trajectory has high accuracy in both the near and far segments.

The above embodiments of the present disclosure may be implemented separately, or in any combination without conflict, and may be specifically set based on an actual requirement, which is not limited in the present disclosure.

Any one of the control methods for the vehicle provided in the embodiments of the present disclosure may be implemented by any suitable device with a data processing capability, including but not limited to: a terminal device, a server, and the like. Alternatively, any one of the control methods for the vehicle provided in the embodiments of the present disclosure may be implemented by a processor. For example, the processor implements, by calling corresponding instructions stored in a memory, any one of the control methods for the vehicle mentioned in the embodiments of the present disclosure. This is not repeated below.

### Exemplary Apparatus

FIG. 14 is a schematic diagram illustrating a structure of a control apparatus for a vehicle according to an exemplary embodiment of the present disclosure. The apparatus of this embodiment may be used to implement the corresponding method embodiment of the present disclosure. The apparatus shown in FIG. 14 may include: an acquisition module 51, a first processing module 52, a second processing module 53, a third processing module 54, and a fourth processing module 55.

The acquisition module 51 may be configured for acquiring a first image captured by a camera with a preset viewing angle mounted on the vehicle.

The first processing module 52 may be configured for transforming the first image into a second image in bird's-eye view.

The second processing module 53 may be configured for determining, based on the second image, a first predicted driving trajectory of the vehicle in a local coordinate system.

The third processing module 54 may be configured for correcting the first predicted driving trajectory based on observation information corresponding to the first image to a second predicted driving trajectory.

The fourth processing module 55 may be configured for controlling a driving state of the vehicle based on the second predicted driving trajectory.

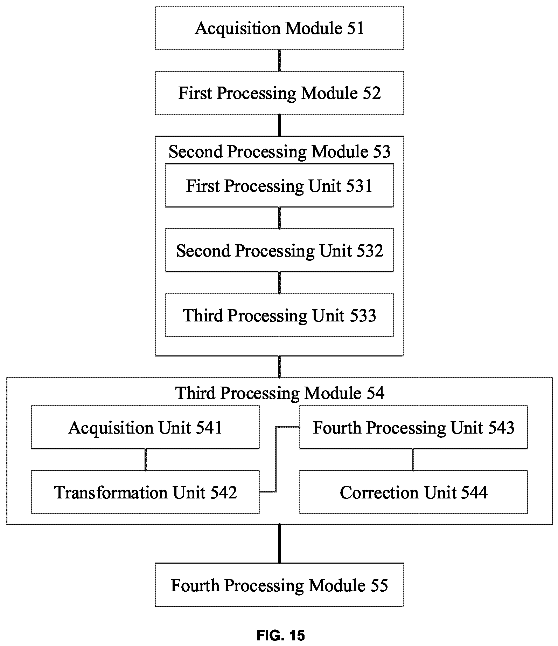

FIG. 15 is a schematic diagram illustrating a structure of a control apparatus for a vehicle according to another exemplary embodiment of the present disclosure.

In some optional embodiments, as shown in FIG. 15, a second processing module 53 may include a first processing unit 531, a second processing unit 532, and a third processing unit 533.

The first processing unit 531 may be configured for processing the second image based on a driving trajectory keypoint detection model to obtain a first driving trajectory keypoint sequence in bird's-eye view.

The second processing unit 532 may be configured for transforming the first driving trajectory keypoint sequence in bird's-eye view to the local coordinate system to obtain a second driving trajectory keypoint sequence in the local coordinate system.

The third processing unit 533 may be configured for determining the first predicted driving trajectory based on the second driving trajectory keypoint sequence.

In some optional embodiments, the third processing unit 533 may be specifically configured for performing outlier removal and NMS processing on the second driving trajectory keypoint sequence to obtain a third driving trajectory keypoint sequence; and performing curve fitting on the third driving trajectory keypoint sequence to obtain the first predicted driving trajectory.

In some optional embodiments, as shown in FIG. 15, the third processing module 54 may include an acquisition unit 541, a transformation unit 542, a fourth processing unit 543, and a correction unit 544.

The acquisition unit 541 may be configured for acquiring a first historical predicted driving trajectory.

The transformation unit 542 may be configured for transforming the historical predicted driving trajectory to the local coordinate system to obtain a second historical predicted driving trajectory.

The fourth processing unit 543 may be configured for determining, based on the second historical predicted driving trajectory and the first predicted driving trajectory, a to-be-corrected predicted driving trajectory.

The correction unit 544 may be configured for correcting, based on the observation information corresponding to the first image, the to-be-corrected predicted driving trajectory to obtain the second predicted driving trajectory.

In some optional embodiments, the fourth processing unit 543 may be specifically configured for: performing clustering on the second historical predicted driving trajectory and the first predicted driving trajectory to obtain a clustering result, where the clustering result includes at least one cluster; determining, based on the clustering result, a target cluster satisfying a preset condition from the at least one cluster; and performing fusion on predicted driving trajectories in the target cluster to obtain the to-be-corrected predicted driving trajectory.

In some optional embodiments, the correction unit 544 may be specifically configured for: determining, based on the observation information corresponding to the first image, a target observation quantity for the correcting of the to-be-corrected predicted driving trajectory; determining a constraint point based on the target observation quantity; and performing filtering on the first predicted driving trajectory based on the constraint point to obtain the second predicted driving trajectory.

FIG. 16 is a schematic diagram illustrating a structure of a control apparatus for a vehicle according to still another exemplary embodiment of the present disclosure.

In some optional embodiments, as shown in FIG. 16, the third processing module 54 may include: a first determination unit 54a, a second determination unit 54b, and a filter unit 54c.

The first determination unit 54a may be configured for determining, based on the observation information corresponding to the first image, a target observation quantity for the correcting of the first predicted driving trajectory.

The second determination unit 54b may be configured for determining a constraint point based on the target observation quantity.

The filter unit 54c may be configured for performing filtering on the first predicted driving trajectory based on the constraint point to obtain the second predicted driving trajectory.

In some optional embodiments, the first determination unit 54a may be configured for determining, based on the observation information corresponding to the first image, a target observation quantity for the correcting of the to-be-corrected predicted driving trajectory. The second determination unit 54b may be configured for determining a constraint point based on the target observation quantity. The filter unit 54c may be configured for performing filtering on the to-be-corrected predicted driving trajectory based on the constraint point to obtain the second predicted driving trajectory.

In some optional embodiments, the first determination unit 54a may be specifically configured for: determining, based on the observation information, the target observation quantity including at least one of a lane line curve, a curb curve, a lane line point sequence, a curb point sequence, and a driving trajectory point sequence of a target vehicle, satisfying a first condition, around the vehicle in the local coordinate system.

In some optional embodiments, the filter unit 54c may be specifically configured for: performing EKF on the first predicted driving trajectory based on the constraint point to obtain a third predicted driving trajectory; determining, based on the third predicted driving trajectory, a first sub-trajectory curve within a first distance range nearer to the vehicle and a second sub-trajectory curve within a second distance range farther from the vehicle; and determining the second predicted driving trajectory based on the first sub-trajectory curve and the second sub-trajectory curve.

In some optional embodiments, the filter unit 54c may be specifically configured for: determining a first connection point from the first sub-trajectory curve; correcting the first sub-trajectory curve based on the second sub-trajectory curve to obtain a corrected sub-trajectory curve as a third sub-trajectory curve; determining a second connection point from the second sub-trajectory curve; determining a connection curve, satisfying a second condition, for connecting the first connection point and the second connection point ; and determining the second predicted driving trajectory based on the second sub-trajectory curve, the third sub-trajectory curve, and the connection curve.

In some optional embodiments, the filter unit 54c may be specifically configured for: searching, in a preset direction, the second sub-trajectory curve for a sampling point to obtain a found sampling point as a current sampling point; and determining, a target point, from the third sub-trajectory curve, where a longitudinal distance for the target point relative to the vehicle is the same as a longitudinal distance for the current sampling point relative to the vehicle; determining a lateral position difference and an angle difference between the current sampling point and the target point; determining relationships of the lateral position difference and the angle difference with a third condition; and determining the second connection point based on the relationships of the lateral position difference and the angle difference with the third condition.

For beneficial technical effects corresponding to the exemplary embodiment of this apparatus, refer to the corresponding beneficial technical effects of the exemplary method section described above, which are not repeated herein.

### Exemplary Electronic Device

FIG. 17 is a diagram illustrating a structure of an electronic device according to an embodiment of the present disclosure. The electronic device includes at least one processor 91 and a memory 92.

The processor 91 may be a central processing unit (CPU) or another form of processing unit having a data processing capability and/or an instruction execution capability, and may control another component in the electronic device 90 to perform a desired function.

The memory 92 may include one or more computer program products. The computer program product may include various forms of computer readable storage media, such as a volatile memory and/or a non-volatile memory. The volatile memory may include, for example, a random access memory (RAM) and/or a cache. The non-volatile memory may include, for example, a read-only memory (ROM), a hard disk, or a flash memory. The computer readable storage medium may store one or more computer program instructions. The processor 91 may run the one or more computer program instructions to implement the method and/or other desired functions in the foregoing embodiments of the present disclosure.

In an example, the electronic device 90 may further include: an input means 93 and an output means 94. The components are interconnected through a bus system and/or other forms of connection mechanisms (not shown).

The input means 93 may further include, for example, a keyboard or a mouse.

The output means 94 may output various information to the outside, and may include, for example, a display, a loudspeaker, a printer, and a communication network and a remote output means connected thereto.

Certainly, for simplicity, only some components in the electronic device 90 that are related to the present disclosure are shown in FIG. 17, and components such as a bus and an input/output interface are omitted. Besides, the electronic device 90 may further include any other appropriate components depending on specific applications.

Exemplary Computer Program Product And Computer Readable Storage Medium

In addition to the foregoing method and device, the embodiments of the present disclosure may also provide a computer program product including computer program instructions that, when executed by a processor, cause the processor to perform the steps of the method according to the embodiments of the present disclosure that is described in the "Exemplary Method" section.

The computer program product may be program codes, written with one or any combination of a plurality of programming languages, which are configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when executed by a processor, cause the processor to perform the steps of the method according to the embodiments of the present disclosure that is described in the "Exemplary Method" section.

The computer readable storage medium may be one readable medium or any combination of a plurality of readable media. The readable medium may be a readable signal medium or a readable storage medium. The readable storage medium includes, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an EPROM or a flash memory, an optical fiber, a portable compact disk ROM (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for each of the embodiment of the present disclosure. In addition, specific details disclosed above are merely for examples and for ease of understanding, rather than limitations. The details described above do not limit that the present disclosure must be implemented by the foregoing specific details.

A person skilled in the art may make various modifications and variations to the present disclosure without departing from the spirit and scope of this application. The present disclosure is intended to cover these modifications and variations provided that they fall within the scope of protection defined by the claims of the present disclosure or equivalents thereof.

## Claims

1. A control method for a vehicle, **characterized by** comprising:
acquiring (201) a first image captured by a camera with a preset viewing angle mounted on the vehicle;
transforming (202) the first image into a second image in bird's-eye view;
determining (203), based on the second image, a first predicted driving trajectory of the vehicle in a local coordinate system;
correcting (204) the first predicted driving trajectory based on observation information corresponding to the first image to obtain a second predicted driving trajectory; and
controlling (205) a driving state of the vehicle based on the second predicted driving trajectory.

2. The method according to claim 1, wherein the determining, based on the second image, a first predicted driving trajectory of the vehicle in a local coordinate system comprises:
processing (2031) the second image based on a driving trajectory keypoint detection model to obtain a first driving trajectory keypoint sequence in bird's-eye view;
transforming (2032) the first driving trajectory keypoint sequence in bird's-eye view to the local coordinate system to obtain a second driving trajectory keypoint sequence in the local coordinate system; and
determining (2033) the first predicted driving trajectory based on the second driving trajectory keypoint sequence.

3. The method according to claim 2, wherein the determining the first predicted driving trajectory based on the second driving trajectory keypoint sequence comprises:
performing outlier removal and non-maximum suppression (NMS) processing on the second driving trajectory keypoint sequence to obtain a third driving trajectory keypoint sequence; and
performing curve fitting on the third driving trajectory keypoint sequence to obtain the first predicted driving trajectory.

4. The method according to claim 1, wherein the correcting the first predicted driving trajectory based on observation information corresponding to the first image to obtain a second predicted driving trajectory comprises:
Acquiring (2041) a first historical predicted driving trajectory;
transforming (2042) the historical predicted driving trajectory to the local coordinate system to obtain a second historical predicted driving trajectory;
determining (2043), based on the second historical predicted driving trajectory and the first predicted driving trajectory, a to-be-corrected predicted driving trajectory; and
correcting (2044), based on the observation information corresponding to the first image, the to-be-corrected predicted driving trajectory to obtain the second predicted driving trajectory.

5. The method according to claim 4, wherein the determining, based on the second historical predicted driving trajectory and the first predicted driving trajectory, a to-be-corrected predicted driving trajectory comprises:
performing clustering on the second historical predicted driving trajectory and the first predicted driving trajectory to obtain a clustering result comprising at least one cluster;
determining, based on the clustering result, a target cluster satisfying a preset condition from the at least one cluster; and
performing fusion on predicted driving trajectories in the target cluster to obtain the to-be-corrected predicted driving trajectory.

6. The method according to any one of claims 1 to 5, wherein the correcting the first predicted driving trajectory based on observation information corresponding to the first image to obtain a second predicted driving trajectory comprises:
determining (204a), based on the observation information corresponding to the first image, a target observation quantity for the correcting of the first predicted driving trajectory;
determining (204b) a constraint point based on the target observation quantity; and
performing (204c) filtering on the first predicted driving trajectory based on the constraint point to obtain the second predicted driving trajectory.

7. The method according to claim 6, wherein the determining, based on the observation information corresponding to the first image, a target observation quantity for the correcting of the first predicted driving trajectory comprises:
determining, based on the observation information, the target observation quantity including at least one of a lane line curve, a curb curve, a lane line point sequence, a curb point sequence, and a driving trajectory point sequence of a target vehicle, satisfying a first condition, around the vehicle in the local coordinate system.

8. The method according to claim 6, wherein the performing filtering on the first predicted driving trajectory based on the constraint point to obtain the second predicted driving trajectory comprises:
performing extended Kalman filter on the first predicted driving trajectory based on the constraint point to obtain a third predicted driving trajectory;
determining, based on the third predicted driving trajectory, a first sub-trajectory curve within a first distance range nearer to the vehicle and a second sub-trajectory curve within a second distance range farther from the vehicle; and
determining the second predicted driving trajectory based on the first sub-trajectory curve and the second sub-trajectory curve.

9. The method according to claim 8, wherein the determining the second predicted driving trajectory based on the first sub-trajectory curve and the second sub-trajectory curve comprises:
determining a first connection point from the first sub-trajectory curve;
correcting the first sub-trajectory curve based on the second sub-trajectory curve to obtain a third sub-trajectory curve;
determining a second connection point from the second sub-trajectory curve;
determining a connection curve, satisfying a second condition, for connecting the first connection point and the second connection point ; and
determining the second predicted driving trajectory based on the second sub-trajectory curve, the third sub-trajectory curve, and the connection curve.

10. The method according to claim 9, wherein the determining a second connection point from the second sub-trajectory curve comprises:
searching, in a preset direction, the second sub-trajectory curve for a sampling point to obtain a found sampling point as a current sampling point; and determining, a target point, corresponding to the current sampling point, from the third sub-trajectory curve, wherein a longitudinal distance for the target point relative to the vehicle is the same as a longitudinal distance for the current sampling point relative to the vehicle;
determining a lateral position difference and an angle difference between the current sampling point and the target point;
determining relationships of the lateral position difference and the angle difference with a third condition; and
determining the second connection point based on the relationships of the lateral position difference and the angle difference with the third condition.

11. A control apparatus for a vehicle, the control apparatus being **characterized by** comprising:
an acquisition module (51) configured for acquiring a first image captured by a camera with a preset viewing angle mounted on the vehicle;
a first processing module (52) configured for transforming the first image into a second image in bird's-eye view;
a second processing module (53) configured for determining, based on the second image, a first predicted driving trajectory of the vehicle in a local coordinate system;
a third processing module (54) configured for correcting the first predicted driving trajectory based on observation information corresponding to the first image to obtain a second predicted driving trajectory; and
a fourth processing module (55) configured for controlling a driving state of the vehicle based on the second predicted driving trajectory.

12. The control apparatus according to claim 11, wherein the second processing module (53) comprises:
a first processing unit (531) configured for processing the second image based on a driving trajectory keypoint detection model to obtain a first driving trajectory keypoint sequence in bird's-eye view;
a second processing unit (532) configured for transforming the first driving trajectory keypoint sequence in bird's-eye view to the local coordinate system to obtain a second driving trajectory keypoint sequence in the local coordinate system; and
a third processing unit (533) configured for determining the first predicted driving trajectory based on the second driving trajectory keypoint sequence.

13. The control apparatus according to claim 11, wherein the third processing module (54) comprises:
acquisition unit (541) configured for acquiring a first historical predicted driving trajectory;
a transformation unit (542) configured for transforming the historical predicted driving trajectory to the local coordinate system to obtain a second historical predicted driving trajectory;
a fourth processing unit (543) configured for determining, based on the second historical predicted driving trajectory and the first predicted driving trajectory, a to-be-corrected predicted driving trajectory; and
a correction unit (544) configured for correcting, based on the observation information corresponding to the first image, the to-be-corrected predicted driving trajectory to obtain the second predicted driving trajectory.

14. A non-transitory computer readable storage medium, on which a computer program is stored, the non-transitory computer readable storage medium being **characterized by** the computer program, when executed by a processor, causes the processor to implement the method according to any one of claims 1 to 10.

15. An electronic device (90), **characterized by** comprising:
a processor (91); and
a memory (92) configured for storing instructions executable by the processor (91),
wherein the processor (91) is configured for reading the executable instructions from the memory (92), and executing the instructions to implement the method according to any one of claims 1 to 10.
